(19) Europäisches Patentamt
European Patent Office
Office européen des brevets

(11) EP 2 228 339 A1

(12) EUROPEAN PATENT APPLICATION

(43) Date of publication:
**15.09.2010 Bulletin 2010/37**

(51) Int Cl.:
***C01B 3/06*** *(2006.01)*

(21) Application number: **10156441.7**

(22) Date of filing: **12.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **13.03.2009 TW 098108327**
**06.11.2009 TW 098137806**

(71) Applicant: **Industrial Technology Research Institute**
**Chutung Hsinchu 31040 (TW)**

(72) Inventors:
- **Ku, Jie-Ren**
  **807, Kaohsiung City (TW)**
- **Tsai, Shing-Fen**
  **744, Tainan County (TW)**
- **Hsu, Ya-Yi**
  **711, Tainan County (TW)**
- **Hsueh, Chan-Li**
  **852, Kaohsiung County (TW)**
- **Jeng, Ming-Shan**
  **221, Taipei County (TW)**
- **Tsau, Fanghei**
  **833, Kaohsiung County (TW)**

(74) Representative: **Lang, Christian et al**
**IP Law Firm LangRaible GbR**
**Patent- und Rechtsanwälte**
**Herzog-Wilhelm-Straße 22**
**80331 München (DE)**

# (54) Solid hydrogen fuel and methods of manufacturing and using the same

(57) A solid hydrogen fuel, in form of a solid block, includes at least a hydride powder well-mixed with at least a solid catalyst. Method of manufacturing the solid hydrogen fuel includes steps of well-mixing the hydride powder and the solid catalyst; and compressing the mixed powders to form a solid block. When use of the solid hydrogen fuel is required, water is mixed into the hydride powder for generating hydrogen gas, wherein the hydride powder is catalyzed by the solid catalyst and reacts with water to generate hydrogen gas.



Printed by Jouve, 75001 PARIS (FR)

## Description

This application claims the benefit of Taiwan applications Serial No. 98108327, filed March 13, 2009 and Serial No.98137806, filed November 6, 2009, the subject matter of which is incorporated herein by reference.

BACKGROUND OF THE INVENTION

Field of the Invention

The disclosure relates in general to a solid hydrogen fuel and methods of manufacturing and using the same, and more particularly to a solid hydrogen fuel which can be used easily and capable of releasing hydrogen effectively. The method of using the solid hydrogen fuel of the disclosure is a great breakthrough in the liquid hydrogen fuel.

Description of the Related Art

Fuel cell is a device capable of converting chemical energy into electrical energy. The fuel cell can generate electrical energy continuously while fuel and oxidant are provided constantly. As to the hydrogen fuel cell, the fuel is hydrogen, and the oxidant is oxygen. However, hydrogen is dangerous and flammable gas, and the storage condition is strict. Therefore, hydride solution or hydrogen storage material containing hydrogen is used as hydrogen source conventionally. Hydrogen is abstracted there-from to be provided for the fuel cell.

A conventional hydrogen production system in a hydrogen fuel cell and an operating method thereof are described as follows. Sodium borohydride solution is used as hydrogen source in the hydrogen production system. Please refer to FIG. 1. FIG. 1 illustrates a conventional hydrogen production system. The conventional hydrogen production system 110 is used for abstracting hydrogen from sodium borohydride solution to provide hydrogen for a fuel cell 100. The hydrogen production system 110 includes a fuel tank 111, a recycle tank 112, a pump 113, a catalyst bed 114, a gas liquid separation chamber 115, a pressure sensor 116 and a controller 117.

In FIG. 1, the controller 117 is coupled with the controller 117 and the pressure sensor 116. The pump 113 transports sodium borohydride solution (liquid fuel) to the catalyst bed 114. After hydrogen is released, sodium perborate solution is extracted from the catalyst bed 114. The chemical equation (1) is as follows:

$$NaBH_4+2H_2O \xrightarrow{catalyst} 4H_2+NaBO_2+Heat \qquad (1)$$

When the conventional hydrogen production system 110 starts to operate, the controller 117 controls the pump 113 according to the pressure of hydrogen detected in the gas liquid separation chamber 115 by the pressure sensor 116, for further controlling the hydrogen production. When the pressure sensor 116 detects that the pressure of hydrogen is insufficient, the pump 113 transports sodium borohydride solution in the fuel tank 111 and the produced water of the fuel cell 100 to the catalyst bed 114. The hydrolysis reaction of sodium borohydride is accelerated by the catalytic action of the catalyst bed 114 to produce hydrogen rapidly. Then, in the gas liquid separation chamber 115, the product of the hydrolysis reaction of sodium borohydride, namely sodium perborate solution, is transported back to the recycle tank 112 to be stored. Hydrogen is transported to the anode of the fuel cell 100 to bring about an electrochemical reaction for continuously producing direct current and produced water. However, as the equation (1) shows, the precipitation of sodium borohydride/sodium perborate clogs the pipes. As a result, the pump 113 cannot pump the liquid fuel into the catalyst bed 114, which stops the production of hydrogen.

Moreover, liquid sodium borohydride solution is used as the hydrogen source conventionally and hydrogen is extracted there-from. Therefore, the production of hydrogen is limited by the solubility of sodium borohydride in water. For example, in the hydrolysis reaction of solid sodium borohydride, the theoretical production of hydrogen can reach 10.8 wt%. However, when sodium borohydride is used in the form of solution, the solubility of sodium borohydride must be considered. The solubility of sodium borohydride in water is about 0.55g $NaBH_4$ / 1g $H_2O$ at room temperature, which results in the theoretical production of hydrogen to be 7.5 wt%. Furthermore, in order to avoid the precipitation of sodium perborate to clog the pipe, the solubility of sodium perborate in water has to be considered. The solubility of sodium perborate in water is about 0.28g $NaBO_2$ / 1g $H_2O$. Therefore, practically the theoretical production of hydrogen is only 2.9 wt%.

Besides, the conventional liquid hydrogen fuel has the problem that hydrogen cannot be released in a short time. FIG. 2A illustrates a method of use of conventional liquid hydrogen fuel. FIG. 2B shows the curve of hydrogen release using conventional liquid hydrogen fuel. When conventional liquid hydrogen fuel is in use, catalyst 14 can be added to alkaline liquid sodium borohydride ($NaBH_4$) solution 11. Hydrogen is released when the catalyst 14 contacts and reacts with the solution 11. 1 g sodium borohydride is dissolved in 40g water to form sodium hydride solution. 0.2g cation exchange resin (IR-120) chelating cobalt ions ($Co^{2+}$/IR-120) is used as catalyst. The hydrogen release curve in FIG. 2B is obtained by the method of use of conventional liquid hydrogen fuel shown in FIG. 2A.

However, in addition to the solubility of sodium perborate in water, there are still other problems. As shown in FIG. 2B, right after hydrogen is released in the beginning, the hydrogen-releasing rate decreases rapidly. After dropping down to point A, the hydrogen-releasing rate remains low for a long time. At the end of the time axis, the hydrogen-releasing rate still stays low. Therefore, conventional liquid hydrogen fuel cannot completely release hydrogen in a short time.

As stated above, when liquid fuel is in use, the problem of solubility lowers the theoretical production of hydrogen from 10.8 wt% to 7.5 wt% even as low as 2.9 wt%, which results in great loss in hydrogen storage amount. Even when larger fuel tank and recycle tank are used for making up the loss, the great volume limits the application of the fuel cell. Furthermore, the solution-base hydrogen source such as sodium borohydride solution makes the system mechanical design more complicated, which also limits the application of the product. Moreover, as to the conventional method using the contact reaction of catalyst and borohydride solution to release hydrogen, hydrogen cannot be released completely in a short time.

## SUMMARY OF THE INVENTION

The disclosure relates to a solid hydrogen fuel and a manufacturing method and a method of use thereof. Solid hydride powder and solid catalyst are mixed well and then bonded by press (mold process) to form a solid hydrogen fuel. Hydrogen can be produced by simply contacting the solid hydrogen fuel with water, and the hydrogen-releasing rate is high. Therefore, the solid hydrogen fuel can be applied to high power fuel cell (up to 1 kW). The solid hydrogen fuel is easy to carry because it is easily shaped into different pieces with various forms by molding process. The solid hydrogen fuel is flexible to fit into any mechanical design required for a product, which further increases users' willingness to use the product. Moreover, because of no solubility problem, the solid hydrogen fuel can produce more hydrogen, comparing to the conventional method using hydride solution to produce hydrogen with the same weight of material system.

According to the first aspect of the present disclosure, a method of manufacturing the solid hydrogen fuel is provided. First, solid hydride powder and solid catalyst are mixed well. Then, the mixture is formed into a block by molding process. The block includes at least a hydride powder and at least a solid catalyst (hydrogen-releasing catalyst) which are mixed well in one embodiment. In the embodiment, alternatively, the hydrogen-releasing catalyst powder can be prepared from grinding the solid catalyst. In another embodiment, the solid catalyst and the solid hydride powder are ground individually, and then mixed well as a mixture. Alternatively, the solid catalyst and the solid hydride powder are ground and mixed simultaneously. The mixture containing well-mixed catalyst powder (/particles) and hydride powder (/particles) is then formed into a solid block by molding process. The "grinding" or "individually grinding followed by mixing" process could be performed by various types of crushers, mullers, mills and grinding machines; such as a jaw crusher, a gyratory crusher, a fine crusher, a cone crusher, a roll crusher, an impact crusher, a snipping crusher, a multiple cutting crusher, a ball mill, a rod mill, a shaker mill, a vibration mill and the likes. Also, the "simultaneously grinding and mixing" process could be performed by various types of mixers, grinding machines and blenders; such as a ball mill, a roll mill, a shaker mill, a vibration mill, a grinding machine, a horizontal cylinder mixer, a vertical cylinder mixer, a double cone mixer, a horizontal cylinder mixer with paddles, a hexagonal barrel mixer, an octagonal barrel mixer, water chestnut-type mixer, a single-cone type mixer, a cylindrical mixer with internal spiral blades and paddles, a V-type mixer, a vertical spiral mixer, a single-shaft horizontal spiral mixer, a multiple- shaft spiral mixer, a single-corn planetary spiral mixer, a double-cone spiral mixer, a rotating circular plate type mixer, a centrifugal mixer, a helical stirring mixer, a double-blade eggbeater, a double-ball stirring mixer or the likes.

According to the second aspect of the present disclosure, a method of using a solid hydrogen fuel which is able to be applied to a fuel cell is provided. First, the press-formed block of the solid hydrogen fuel is provided. The block comprises at least a hydride powder and at least a solid catalyst which are well mixed. Hydrogen can be released by just contacting water with the block described above. The hydride powder in the block reacts with water to release hydrogen. The solid catalyst in the block is for catalyzing the reaction to release hydrogen. In one embodiment, the solid catalyst and the solid hydride powder could be pre-ground for requiring small particle sizes. Alternatively, the solid catalyst and the solid hydride powder are ground and mixed simultaneously for effectively increasing the hydrogen conversion rate.

The disclosure will become apparent from the following detailed description of the preferred but non-limiting

embodiments. The following description is made with reference to the accompanying drawings.

BRIEF DESCRIPTION OF THE DRAWINGS

FIG. 1 illustrates a conventional hydrogen production system;

FIG. 2A illustrates a method of use of conventional liquid hydrogen fuel;

FIG. 2B shows the curve of hydrogen release using conventional liquid hydrogen fuel;

FIG. 3 illustrates the hydrogen production system using the solid hydrogen fuel of the present disclosure;

FIG. 4A illustrates the method of use of the solid hydrogen fuel of the embodiment of the present disclosure;

FIG. 4B shows the curve of hydrogen release using the solid hydrogen fuel of the embodiment of the present disclosure; and

FIG. 5 shows hydrogen production rate (hydrogen-releasing rate) of two solid hydrogen fuel of the embodiment of the present disclosure.

FIG. 6 shows hydrogen yield rate (conversion rate) of three solid hydrogen fuels manufactured by different pre-particlized procedures according to the embodiment of the present disclosure.

Table 1 shows the weight percentage of hydrogen production of two solid hydrogen fuels of the embodiment of the present disclosure, wherein the hydrogen production of table 1 is calculated by using the hydrogen production rate of FIG. 5.

Table 2 shows the weight percentages of hydrogen production of three solid hydrogen fuels manufactured by different pre-particlized procedures according to the embodiment of the present disclosure, wherein the hydrogen production of Table 2 is calculated by using the hydrogen production rate of FIG. 6.

DETAILED DESCRIPTION OF THE INVENTION

<Solid hydrogen fuel>

In an embodiment of the present disclosure, a solid hydrogen fuel used in a fuel cell to produce hydrogen is provided. Solid hydride powder and solid catalyst are mixed well to form the solid hydrogen fuel. The solid hydrogen fuel reacts with water to produce hydrogen as the chemical equation (1) shown. The hydrogen yield rate of the solid hydrogen fuel is greater than that of conventional solution-base hydride (the limitation of hydrogen production yield rate of conventional liquid hydride is 7.5 wt.%, and even 2.9 wt.%, if considering of solubility of sodium borohydride and clogging, respectively). Furthermore, the solid hydrogen fuel is easy to carry because it can be shaped into various forms of blocks. The solid hydrogen fuel is flexible to fit into any mechanical design required for a product, which further increases users' willingness to use the product.

According to the embodiment of the present disclosure, the solid hydrogen fuel includes first hydride powder and solid catalyst. The first hydride powder is for reacting with water to release hydrogen. The solid catalyst is mixed well with the first hydride powder and used for catalyzing of the hydrogen-releasing reaction.

Various structures of the solid catalyst can be used in the solid hydrogen fuel of the present embodiment. Three types of the solid catalyst are described as follows. However, the present disclosure is not limited thereto. The first solid catalyst is for example metal nano-particles and/or metal micro-particles (namely, the first solid catalyst powder includes plenty of metal nano-particles and/or metal micro-particles). The second solid catalyst is for example catalyst carriers with metal nano-particles, and/or metal micro-particles (namely, the second solid catalyst includes catalyst carriers with metal nano-particles and/or metal micro-particles. Moreover, the metal nano-particles and/or metal micro-particles cover the entire surface areas of the catalyst carriers). The third solid catalyst is for example catalyst carriers with plenty of metal atoms, metal nano-particles, and/or metal micro-particles (namely, the third solid catalyst includes plenty of catalyst carriers with metal atoms, metal nano-particles, and/or metal micro-particles. Moreover, the metal atoms, metal nano-particles, and/or metal micro-particles cover the entire surface areas of the catalyst carriers). The fourth solid catalyst is for example catalyst carriers with plenty of chelate metal ions, plenty of metal atoms, metal nano-particles, and/or metal micro-particles on the surface (namely, the fourth solid catalyst includes plenty of catalyst carriers with plenty of chelate metal ions, plenty of metal atoms, metal nano-particles, and/or metal micro-particles on the surface).

Preferably, but non-restrictively, the above-described chelate metal ions, metal atoms, metal nano-particles, and/or metal micro-particles includes at least one or more selected from the group consisting of ruthenium, cobalt, nickel, iron, manganese and copper. For example, the first solid catalyst includes two or more metal nano-particles and/or metal micro-particles. For another example, the second solid catalyst can include the catalyst carriers with two or more metal nano-particles and/or metal micro-particles. Similarly, the above-described metal ions include at least one or more selected from the group consisting of ruthenium, cobalt, nickel, iron, manganese and copper. For example, the third solid catalyst can include two or more metal ions. Furthermore, the solid catalyst could be pre-ground to acquire smaller particles before mixing. The grinding process could be performed by various types of crushers or mullers such as a jaw

crusher, a gyratory crusher, a fine crusher, a cone crusher, a roll crusher, an impact crusher, a snipping crusher, a multiple cutting crusher and the likes; or by various types of mill s such as a ball mill, a rod mill, a shaker mill, a vibration mill and the likes; or by any grinding machine.

Furthermore, in the composition of the solid hydrogen fuel, the weight percentage of the solid catalyst to the total weight is preferably between 0.0001 wt% and 50 wt%. The average particle size of the solid catalyst is preferably between 1 nm and 10mm. The range of the solid catalyst is different depending on the various applications. Take ruthenium for example. The cost of ruthenium is higher, but it has a great catalytic effect on hydrolysis reaction of sodium borohydride. Therefore, the weight percentage of ruthenium can be lowered when the application demand is met, for reducing the manufacturing cost. Therefore, the type of metal and the weight percentage of the catalyst powder can be adjusted according to the practical conditions. The present invention is not limited thereto.

In the composition of the solid hydrogen fuel of the present disclosure, solid sodium borohydride is used as the first hydride of the present invention as an example. The rate of hydrolysis reaction of sodium borohydride is good, and sodium borohydride is inexpensive and easy to be obtained. Sodium borohydride is stable in the dry condition under room temperature. It is easy to grind sodium borohydride for forming powder. However, when applied practically, the present invention is not limited thereto.

Furthermore, the second hydride powder can be added into the composition of solid hydrogen fuel. The second hydride powder is mixed well with the first hydride powder and the solid catalyst. Also, the second hydride powder reacts with water to bring about a second hydrogen-releasing reaction. Meanwhile, the solid catalyst catalyzes the second hydrogen-releasing reaction to further adjust the hydrogen production rate to meet a product requirement.

The second hydride powder is preferably a hydride with different hydrogen-releasing rate of hydrolysis reaction than sodium borohydride, for different application purposes. For example, the second hydride powder can be selected from the group consisting of lithium aluminum hydride, sodium aluminum hydride, potassium aluminum hydride, beryllium aluminum hydride, magnesium aluminum hydride, calcium aluminum hydride, lithium borohydride, potassium borohydride, beryllium borohydride, magnesium borohydride, calcium borohydride, lithium hydride, sodium hydride, potassium hydride, beryllium hydride, magnesium hydride, calcium hydride, aluminum hydride, ammonia borane, lithium amide, and lithium imide. In an embodiment, the weight percentage of the second hydride to the total weight in the composition of the solid hydrogen fuel is preferably between 0.001 wt% and 50 wt%. The ratio (weight percentage) of the second hydride powder is adjusted according to the conditions of the fuel cell which the solid hydrogen fuel is applied to. For example, when the solid hydrogen fuel is applied to a high power fuel cell, the weight percentage of the second hydride powder (ex: Lithium borohydride) can be increased to enhance the production rate of hydrogen for meeting the demand of the high power fuel cell.

<Method of manufacturing solid hydrogen fuel>

In the embodiment of the present disclosure, a method of manufacturing the solid hydrogen fuel is provided. However, the present invention is not limited thereto. Any one who has ordinary skill in the present invention can understand that the method can be modified according to the practical application conditions. The method of manufacturing the solid hydrogen fuel includes following steps. First, the first hydride powder and the solid catalyst are provided. Please refer to the above description for the composition and percentage of the first hydride powder and the solid catalyst.

Next, the first hydride powder and the solid catalyst are mixed well. In one embodiment, the first hydride powder and the solid catalyst are mixed well by grinding in this step. Or, the solid catalyst and the hydride powder are ground individually, and then the first hydride powder and the solid catalyst powder are mixed well.

It is noted that the steps can be optionally modified in practical applications, and the present invention is not limited to any specific procedures. In one embodiment, the solid catalyst (hydrogen-releasing catalyst beads) is ground to become powder with smaller particle size, and then mixed well with the hydride powder. In another embodiment, the solid hydrogen-releasing catalyst beads and the solid hydride powder are ground individually, and then mixed well as a mixture. In another embodiment, the solid hydrogen-releasing catalyst beads and the solid hydride powder are ground and mixed simultaneously. The related experimental results indicated that the hydrogen yield rate (i.e. hydrogen conversion rate) has been improved if the solid catalyst is ground. Also, compared to individually grinding of the hydrogen-releasing catalyst beads, the solid hydride powder simultaneously mixing and grinding the solid hydrogen-releasing catalyst beads leads to higher hydrogen yield rate.

The "grinding" or "grinding and mixing" process could be performed by various types of crushers, mullers, mills and grinding machines; such as a jaw crusher, a gyratory crusher, a fine crusher, a cone crusher, a roll crusher, an impact crusher, a snipping crusher, a multiple cutting crusher, a ball mill, a rod mill, a shaker mill, a vibration mill and the likes. Also, the step of well mixing the solid hydride powder and the solid catalyst could be performed by various types of mixers, grinding machines and blenders; such as a ball mill, a roll mill, a shaker mill, a vibration mill, a grinding machine, a horizontal cylinder mixer, a vertical cylinder mixer, a double cone mixer, a horizontal cylinder mixer with paddles, a hexagonal barrel mixer, an octagonal barrel mixer, water chestnut-type mixer, a single-cone type mixer, a

cylindrical mixer with internal spiral blades and paddles, a V-type mixer, a vertical spiral mixer, a single-shaft horizontal spiral mixer, a multiple- shaft spiral mixer, a single-corn planetary spiral mixer, a double-cone spiral mixer, a rotating circular plate type mixer, a centrifugal mixer, a helical stirring mixer, a double-blade eggbeater, a double-ball stirring mixer or the likes.

In practical application, selection of the grinding machine depends on the types of catalyst and other requirements of the application. Also, the mixers/blenders are optionally adopted. For example, the solid catalyst and the solid hydride powder could be individually ground by adequate grinding machines to obtain smaller particle sizes, and then mixed well by a mixer/blender. Alternatively, if a grinding machine is adequately selected for grinding the solid catalyst and the solid hydride powder, both powder are ground and mixed simultaneously; meanwhile, the grinding machine functions as a mixer/blender.

Then, it can be decided whether or not to press the mixed powder by a molding-press machine to form a block with particular shape according to the practical conditions. For example, the mixture of the first hydride powder and the solid catalyst can be formed into stick-shape or any other shape by molding process. After molding process, the mixed powder is easy to carry with and the shape can be changed to match the design of the applied system and product.

When the second hydride powder is added into the composition of the solid hydrogen fuel, the above manufacturing method only needs slight modification. For example, the step of providing the powder further includes providing the second hydride powder. Similarly, please refer to the above description for the composition and the percentage of the second hydride powder. The step of mixing powder further includes mixing the first hydride powder, the second hydride powder and the solid catalyst. The step of forming the powder by molding process further includes forming the mixture of the first hydride powder, the second hydride powder and the solid catalyst into a stick shape or any other shape by molding process.

<Method of producing hydrogen in a fuel cell>

In the embodiment of present disclosure, a method of producing hydrogen for a fuel cell is provided. The method includes following steps. First, solid hydrogen fuel is provided for the fuel cell. The solid hydrogen fuel includes at least the first hydride powder and the solid catalyst which are mixed well. The mixed powder is bonded by press (molding process).

Next, the solid hydrogen fuel is mixed with water to produce hydrogen for the anode electrode of the fuel cell to use. When the solid hydrogen fuel is contacted with water, the first hydride powder reacts with water to release hydrogen. The solid catalyst is used for catalyzing the hydrogen-releasing reaction to accelerate the production of hydrogen.

Similarly, when the second hydride powder is added into the composition of solid hydrogen fuel, the second hydride powder reacts with water to release hydrogen, and the solid catalyst catalyzes the hydrogen-releasing reaction to accelerate the production of hydrogen in the step of contacting the solid hydrogen fuel with water.

Furthermore, although the catalyst for catalyzing the hydrogen-releasing reaction in the fuel cell is costly, it can be recycled to be reused. Therefore, the method of producing hydrogen in the fuel cell according to the present disclosure can further include a step of recycling the solid catalyst. As a result, the limited resource on earth can be saved, and the manufacturing cost is reduced as well.

In the present embodiment, the solid catalyst for catalyzing the hydrolysis reaction is mixed in the solid hydrogen fuel. Therefore, after the solid hydrogen fuel reacts with water completely, the solid catalyst remains in the leftover solution. Two methods of recycling the solid catalyst are described as follows according to the type of the solid catalyst. The first recycling method is applied to the second and the third solid catalyst (the solid catalyst including catalyst carriers). Because the second solid catalyst and the third solid catalyst include catalyst carriers, the average particle size is greater. Therefore, the solid catalyst carriers can be captured and recycled by screening. The second recycling method is applied to the first solid catalyst (the solid catalyst without catalyst carriers). The first solid catalyst is nano-particles. It is difficult to recycle the solid catalyst by screening. If the nano-particles has magnetic property, therefore, the solid catalyst can be collect and recycled by a magnet.

A hydrogen production system using the solid hydrogen fuel of the present disclosure in a fuel cell is described as follows. However, any one who has ordinary skill in the present invention can understand that the practical mechanical design of the fuel cell can be modified even when using the same principle. Appropriate modification can be made according to the practical conditions. Therefore, the fuel cell and the hydrogen production system described later are only used as reference for any one with the ordinary skill in the present invention and not to limit the scope of the invention.

Please refer to FIG. 3. FIG. 3 illustrates the hydrogen production system using the solid hydrogen fuel of the present disclosure. The hydrogen production system 210 is for mixing the solid hydrogen fuel F and the produced water of the fuel cell 200 to produce hydrogen for the fuel cell 200. The hydrogen production system 210 includes the fuel tank 211, the recycle tank 212, the transmission belt 213, the reaction chamber 214, the pressure sensor 216 and the controller 217.

In FIG. 3, the controller 217 is coupled with the pressure sensor 216 and the transmission belt 213. When the hydrogen production system 210 starts to operate, the controller 217 controls the operation of the transmission belt 213 according to the hydrogen pressure detected in the reaction chamber 214 by the pressure sensor 216, for further controlling the production of hydrogen. When the pressure sensor 216 detects that the hydrogen pressure is insufficient, the transmission belt 213 transports the solid hydrogen fuel F in the fuel tank 211 to the reaction chamber 214 so that the solid hydrogen fuel F reacts with the produced water of the fuel cell 200 to bring about hydrolysis reaction. As a result, hydrogen is produced rapidly. Thereon, the produced solution of the hydrolysis reaction and the deposited catalyst powder are transported to the recycle tank 212 to be stored. Hydrogen is transported to the anode of the fuel cell 200 to bring about an electrochemical reaction for continuously generating direct current and produced water.

Furthermore, in the method of use of the solid hydrogen fuel (namely, the solid press-formed (molding process) blocks including hydride powder and solid catalyst mixed together), the only step to release hydrogen is to contact with water. The solid hydrogen fuel works with the fuel cell to generate electricity. It is easy to carry the solid hydrogen fuel (especially when formed into strip shape, stick shape or any other press-formed block which is easy to carry with), which significantly increases users' willingness to use the product. Moreover, the shape of the solid hydrogen fuel can be modified to match the mechanical design of the system and product, and therefore the application field is wider. Besides, the solid hydrogen fuel of the present disclosure can effectively release hydrogen completely. Please refer to FIG. 4A and FIG. 4B. FIG. 4A illustrates the method of use of the solid hydrogen fuel of the embodiment of the present disclosure. FIG. 4B shows the curve of hydrogen release using the solid hydrogen fuel of the embodiment of the present disclosure. When the solid hydrogen fuel of the embodiment of the present disclosure is in use, 40g water is added to 8.4g solid hydrogen fuel to bring about the hydrogen-releasing reaction to produce hydrogen. In FIG. 4B, solid press-formed blocks including 1 g sodium borohydride powder and 0.2g cobalt ion catalyst which are mixed together is used as the solid hydrogen fuel 30. The hydrogen releasing curve in FIG. 4B is obtained by adding water (40g) into the solid hydrogen fuel as shown in FIG. 4A.

As shown in FIG. 4B, when the solid hydrogen fuel of the embodiment of the present disclosure is in use, the hydrogen-releasing rate is high in the beginning. Hydrogen is released completely in a short time (about 600 seconds) as the point Q shows (the hydrogen-releasing rate is equal to 0). The hydrogen releasing-rate of the solid hydrogen fuel remains high during the time of releasing hydrogen, which is around 180 sccm to 350 sccm. Compared to FIG. 2B and FIG. 4B, it shows that the solid hydrogen fuel of the embodiment of the present disclosure releases hydrogen completely in a certain period of time (FIG. 4B). The problem that the hydrogen-releasing rate of the conventional liquid hydrogen fuel remains low for a long time (FIG. 2B) is solved.

Furthermore, compared to conventional hydride solution, the hydrogen production of the solid hydrogen fuel of the embodiment of the present disclosure is higher (the hydrogen production of conventional liquid hydride can only reach the limitation of production, namely 2.9wt%). Please refer to FIG. 5 and table 1. FIG. 5 shows hydrogen yield rate (conversion rate) of two solid hydrogen fuels of the embodiment of the present disclosure. Table 1 shows the weight percentage of hydrogen production of two solid hydrogen fuels of the embodiment of the present disclosure. The hydrogen production of table 1 is calculated by using the hydrogen production rate of FIG. 5. In FIG. 5, about 1g of sodium borohydride and 0.15g of cobalt ion catalyst ($Co^{2+}$/IR-120) or 0.15g of ruthenium ion catalyst ($Ru^{3+}$/IR-120) are mixed together to form the solid press-formed blocks to be used as the solid hydrogen fuel 30. The hydrogen production rate of FIG. 5 is obtained by adding water (2g) into the solid hydrogen fuel, as shown in FIG. 4. The hydrogen production rate of table 1 is calculated based on the hydrogen production rate of FIG. 5.

As shown in FIG. 5, when the solid hydrogen fuel of the embodiment of the present disclosure is in use, the hydrogen yield rate (conversion rate) can be more than 90% of the theoretical value (10.8wt.%). The hydrogen production rate of cobalt ion catalyst ($Co^{2+}$/IR-120) can reach 90% the theoretical value in about 20 minutes. The hydrogen production rate of ruthenium ion catalyst ($Ru^{3+}$/IR-120) can reach 96% the theoretical value in about 10 minutes. After calculation, the weight percentage of hydrogen production when using (1) cobalt ion catalyst ($Co^{2+}$/IR-120) can reach 6.73wt.% of the entire reaction materials. The weight percentage of hydrogen production when using (2) ruthenium ion catalyst ($Ru^{3+}$/IR-120) can reach 7.35wt.% of the entire reaction materials. The calculation is as follows.

(1) cobalt ion catalyst ($Co^{2+}$/IR-120)

The theoretical hydrogen production of 1.09g of sodium borohydride =

$$\frac{1.09}{37.8}\times 4\times 24.5 = 2.82(l)$$

The yield rate ( conversion rate): $\frac{2.55}{2.82}\times 100\% = 90.43\%$

The weight percentage of hydrogen production = [(weight of produced hydrogen)/(weight of chemical hydride and water)] =

$$\frac{(2.55/24.5)\times 2}{[(1.09+2)]}\times 100\% = 6.73\%$$

(2) ruthenium ion catalyst ($Ru^{3+}$/IR-120)

The theoretical hydrogen production of 1.12g of sodium borohydride =

$$\frac{1.12}{37.8}\times 4\times 24.5 = 2.91(l)$$

The yield rate ( conversion rate): $\frac{2.81}{2.91}\times 100\% = 96.56\%$

The weight percentage of hydrogen production = [(weight of produced hydrogen)/(weight of chemical hydride and water)]

$$=\frac{(2.81/24.5)\times 2}{[(1.12+2)]}\times 100\% = 7.35\%$$

<Pre-particlized procedure in the manufacture of solid hydrogen fuel>

The solid hydrogen fuel of the embodiment comprises the solid hydride powder and the solid catalyst. In the manufacture of solid hydrogen fuel, the solid catalyst (hydrogen-releasing catalyst) could be pre-grounded into smaller catalyst particles and then mixed well with the hydride powder (in the form of original powder or pre-grounded particles). Also, the solid catalyst and the solid hydride powder could be ground and mixed simultaneously to increase the hydrogen conversion rate. In the practical applications, the machines for the "grinding", "grinding and mixing" and "well mixing"

steps could be optionally selected according to the crushers, mullers, mills, grinding machines and mixers in the forgoing description.

Several experiments have been conducted for observing the effects of pre-grinding the solid catalyst powder on the hydrogen production rate, and three experimental results are provided in FIG. 6 and Table 2.

FIG. 6 shows hydrogen yield rate (conversion rate) of three solid hydrogen fuels manufactured by different pre-particlized procedures according to the embodiment of the present disclosure. Table 2 shows the weight percentages of hydrogen production of three solid hydrogen fuels manufactured by different pre-particlized procedures according to the embodiment of the present disclosure. The hydrogen production of Table 2 is calculated by using the hydrogen production rate of FIG. 6.

Preparations and hydrogen-releasing reactions of three solid hydrogen fuels of FIG. 6 are described below.

(1) 1 g of sodium borohydride ($NaBH_4$) is grounded by ball mill for about 30 minutes, and then manually mixed with 0.125g of cobalt ion catalyst (ungrounded, $Co^{2+}$/IR-120). Also, no solid press-formed blocks is made herein. Afterwards, the hydrogen-releasing reaction brings about by adding 2g of deionized water into the reactor containing the powder mixture. Curve (a) of FIG. 6 represents the hydrogen production rate of the solid hydrogen fuels manufactured herein. Curve (a) of FIG. 6 clearly shows that the hydrogen production rate is pretty low. Even 60 minutes passed, the hydrogen production rate is no more than 10%.

(2) 1 g of sodium borohydride ($NaBH_4$) and 0.125g of cobalt ion catalyst ($Co^{2+}$/IR-120) are individually grounded for about 30 minutes, and then manually mixed in an agate mortar. The mixture is subjected to a tablet press procedure under 10 tons of pressure for 5 minutes to form a tablet. Afterwards, the hydrogen-releasing reaction brings about by adding 2g of deionized water into the reactor containing the tablet. Curve (b) of FIG. 6 represents the hydrogen production rate of the solid hydrogen fuels manufactured herein. Curve (b) of FIG. 6 clearly shows that the hydrogen production rate is greatly increased to about 72% ($H_2$ capacity = 5.36 wt%). However, this is not the most effective way to distribute the catalyst powder evenly throughout $NaBH_4$ (i.e. the hydride powder).

(3) 1 g of sodium borohydride ($NaBH_4$) and 0.125g of cobalt ion catalyst ($Co^{2+}$/IR-120) are mixed and grounded in a ball mill for 30 minutes. The mixture is then subjected to a tablet press procedure under 10 tons of pressure for 5 minutes to form a tablet. Afterwards, the hydrogen-releasing reaction brings about by adding 2g of deionized water into the reactor containing the tablet. Curve (c) of FIG. 6 represents the hydrogen production rate of the solid hydrogen fuels manufactured herein. Curve (c) of FIG. 6 clearly shows that the hydrogen production rate is dramatically increased to about 91 % ($H_2$ capacity = 6.63 wt%). The weight percentage of hydrogen production is up to 6.63 wt% (Table 2). Also, the complex $NaBH_4$/Co has high sensitivity to water, and instantly releases hydrogen as soon as water added. Thus, the result (curve (c)) has indicated that the hydrogen production rate is increased sharply and reaches the equilibrium state soon afterwards.

The experimental results have indicated that pre-particlization of powder, by ball mill or any aforementioned methods of crushing, milling and grinding, does improve the hydrogen conversion rate. Also, if the solid catalyst powder and the hydride powder are mixed and grounded simultaneously, the initial hydrogen production rate is dramatically increased; additionally, the hydrogen conversion rate is increased from 8.49% to 91 % and $H_2$ capacity is increased from 0.63 wt % to 6.63 wt%.

The solid hydrogen fuel of the embodiment of the present disclosure can produce hydrogen by just adding water into it. The method of use is simple, and the hydrogen production rate is high. The solid hydrogen fuel can be applied to high power fuel cell. Furthermore, the limitation of hydrogen production of conventional liquid hydride can only reach 2.9 wt%. Compared to conventional liquid hydride, the hydrogen production of the solid hydride of the embodiment is higher, which is about 6.73%~7.35% wt% (table 1). In other words, compared to hydride solution with the same volume, solid hydrogen fuel carries more hydrogen. Therefore, the required space is reduced effectively, and the weight of the product is lowered. Moreover, after formed into blocks by press (molding process), powder is easy to carry with and can be shaped into many forms. Electricity can be generated in the hydrogen-releasing reaction by just contacting with water. Moreover, the relative experimental results have indicated that the grounded solid catalyst improves the hydrogen conversion rate. Accordingly, the solid catalyst and the hydride powder could be pre-grounded individually before mixing. Alternatively, the solid catalyst and the hydride powder could be grounded and mixed simultaneously for increasing the hydrogen conversion rate more effectively. Thus, the solid hydrogen fuel and manufacturing methods thereof according to the embodiment have several advantages. It is easier to match the mechanical design of the system and product, which simplifies the design of hydrogen production system. Furthermore, solid hydrogen fuel releases hydrogen completely, more effectively and rapidly. Above advantages increase users' willingness to use the product and widen the application field of the product.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A method of manufacturing a solid hydrogen fuel, comprising:

   providing at least a solid hydride powder and at least a solid catalyst, wherein the solid hydride powder reacts with water to bring about a hydrogen-releasing reaction to produce hydrogen, and the solid catalyst catalyzes the hydrogen-releasing reaction;
   well mixing the solid hydride powder and the solid catalyst; and
   forming the well-mixed solid hydride powder and the solid catalyst into a solid press-formed block.

2. A method of using a solid hydrogen fuel which is able to be applied to a fuel cell, the method comprising:

   providing a press-formed block of a solid hydrogen fuel, the block comprising at least a solid hydride powder and at least a solid catalyst which are well mixed; and
   contacting the solid hydrogen fuel with water, the hydride powder and the water bring about a hydrogen-releasing reaction, the solid catalyst used for catalyzing the hydrogen-releasing reaction to produce hydrogen for an anode electrode of the fuel cell.

3. The method according to claim 2, wherein the step of contacting the solid hydrogen fuel and water further comprises step of controlling the hydrogen-releasing reaction by the adding amount of water.

4. The method according to claim 1 or 2, wherein the solid hydride powder is sodium borohydride, and the method comprises well mixing the solid hydride powder and the solid catalyst, and the step of well mixing the solid hydride powder and the solid catalyst is performed by a ball mill, a roll mill, a shaker mill, a vibration mill, a grinding machine, a horizontal cylinder mixer, a vertical cylinder mixer, a double cone mixer, a horizontal cylinder mixer with paddles, a hexagonal barrel mixer, an octagonal barrel mixer, water chestnut-type mixer, a single-cone type mixer, a cylindrical mixer with internal spiral blades and paddles, a V-type mixer, a vertical spiral mixer, a single-shaft horizontal spiral mixer, a multiple- shaft spiral mixer, a single-corn planetary spiral mixer, a double-cone spiral mixer, a rotating circular plate type mixer, a centrifugal mixer, a helical stirring mixer, a double-blade eggbeater, a double-ball stirring mixer or the likes..

5. The method according to claim 1 or 2, further comprising:

   providing a first solid hydride powder, a second solid hydride powder and at least the solid catalyst;
   well mixing the first and the second solid hydride powder and at least the solid catalyst; and
   forming the well-mixed first and second solid hydride powder and the solid catalyst into a solid press-formed block, wherein the percentage of the second solid hydride powder to the total weight of the press-formed block of the solid hydrogen fuel is between 0.001 wt% and 50 wt%.

6. The method according to claim 5, wherein the first solid hydride powder is sodium borohydride, and the second solid hydride powder is selected from the group consisting of lithium aluminum hydride, sodium aluminum hydride, potassium aluminum hydride, beryllium aluminum hydride, magnesium aluminum hydride, calcium aluminum hydride, lithium borohydride, potassium borohydride, beryllium borohydride, magnesium borohydride, calcium borohydride, lithium hydride, sodium hydride, potassium hydride, beryllium hydride, magnesium hydride, calcium hydride, aluminum hydride, ammonia borane, lithium amide, and lithium imide.

7. The method according claim 1 or 2, wherein the percentage of the solid catalyst to the total weight of the press-formed block of the solid hydrogen fuel is 0.0001 wt to 50 wt%, and the solid catalyst is a plurality of metal nano-particles and/or metal micro-particles comprising of one or more selected from the group consisting of ruthenium, cobalt, nickel, iron, manganese and copper.

8. The method according to claim 1 or 2, wherein the solid catalyst comprises a plurality of catalyst carriers, and one or more selected from metal ions, metal atoms, metal nano-particles and metal micro-particles covering the surface of the catalyst carriers, and the metal ions, metal atoms, metal nano-particles or metal micro-particles comprise at least one or more selected from the group consisting of ruthenium, cobalt, nickel, iron, manganese and copper, wherein an average particle size of the solid catalyst is about 1 nm to 100 mm.

9. The method according to claim 8, wherein the average particle size of about 1 nm to 1 mm of the solid catalyst, and

the particle size is achieved by a grinding process, wherein the grinding process is performed by one of a jaw crusher, a gyratory crusher, a fine crusher, a cone crusher, a roll crusher, an impact crusher, a snipping crusher, a multiple cutting crusher and the likes, or one of a ball mill, a rod mill, a shaker mill, a vibration mill and the likes, or one of grinding machines.

**10.** The method according to claim 1 or 2, wherein the step of providing the press-formed block of the solid hydrogen fuel further comprises a step of individually grinding the solid catalyst and the solid hydride powder to acquire smaller particles before mixing, and the solid hydride powder and the solid catalyst are individually ground by one of a jaw crusher, a gyratory crusher, a fine crusher, a cone crusher, a roll crusher, an impact crusher, a snipping crusher, a multiple cutting crusher and the likes, or one of a ball mill, a rod mill, a shaker mill, a vibration mill and the likes, or one of grinding machines.

**11.** The method according to claim 1 or 2, wherein the step of forming or providing the press-formed block of the solid hydrogen fuel further comprises a step of simultaneously mixing and grinding the solid catalyst and the solid hydride powder by one of a jaw crusher, a gyratory crusher, a fine crusher, a cone crusher, a roll crusher, an impact crusher, a snipping crusher, a multiple cutting crusher and the likes, or one of a ball mill, a rod mill, a shaker mill, a vibration mill and the likes, or one of grinding machines.

**12.** The method according to claim 2 further comprising a step of recycling the solid catalyst by a screening method or magnetic collection after the hydrogen-releasing reaction is completed.

**13.** A solid hydrogen fuel, comprising:

at least a hydride powder being able to react with water to bring about a hydrogen-releasing reaction for producing hydrogen; and
at least a solid catalyst mixed well with the hydride powder to catalyze the hydrogen-releasing reaction, and the hydride powder and the solid catalyst being a press-formed block.

**14.** The solid hydrogen fuel according to claim 13, wherein the press-formed block comprises a first hydride powder, a second hydride powder and at least the solid catalyst, and the percentage of the second hydride powder to the total weight of the press-formed block of the solid hydrogen fuel is between 0.001 wt% and 50 wt%, and the second hydride powder is mixed well with the first hydride powder and the solid catalyst, and the first and the second hydride powder respectively react with water to bring about a first and a second hydrogen-releasing reactions to produce hydrogen
wherein the first hydride powder is sodium borohydride, the second hydride powder is selected from the group consisting of lithium aluminum hydride, sodium aluminum hydride, potassium aluminum hydride, beryllium aluminum hydride, magnesium aluminum hydride, calcium aluminum hydride, lithium borohydride, potassium borohydride, beryllium borohydride, magnesium borohydride, calcium borohydride, lithium hydride, sodium hydride, potassium hydride, beryllium hydride, magnesium hydride, calcium hydride, aluminum hydride, ammonia borane, lithium amide, and lithium imide.

**15.** The solid hydrogen fuel according to claim 13, wherein the percentage of the solid catalyst to the total weight of the press-formed block of the solid hydrogen fuel is between 0.0001 wt% and 50 wt%, and the solid catalyst comprise a plurality of metal nano-particles and/or micro-particles, or alternatively comprise a plurality of catalyst carriers and one or more of metal ions, metal atoms, metal nano-particles and micro-particles covering the surface of the catalyst carriers, and the metal ions, metal atoms, metal nano-particles or micro-particles comprise at least one or more selected from the group consisting of ruthenium, cobalt, nickel, iron, manganese and copper, wherein an average particle size of the solid catalyst is about 1 nm to 100 mm.

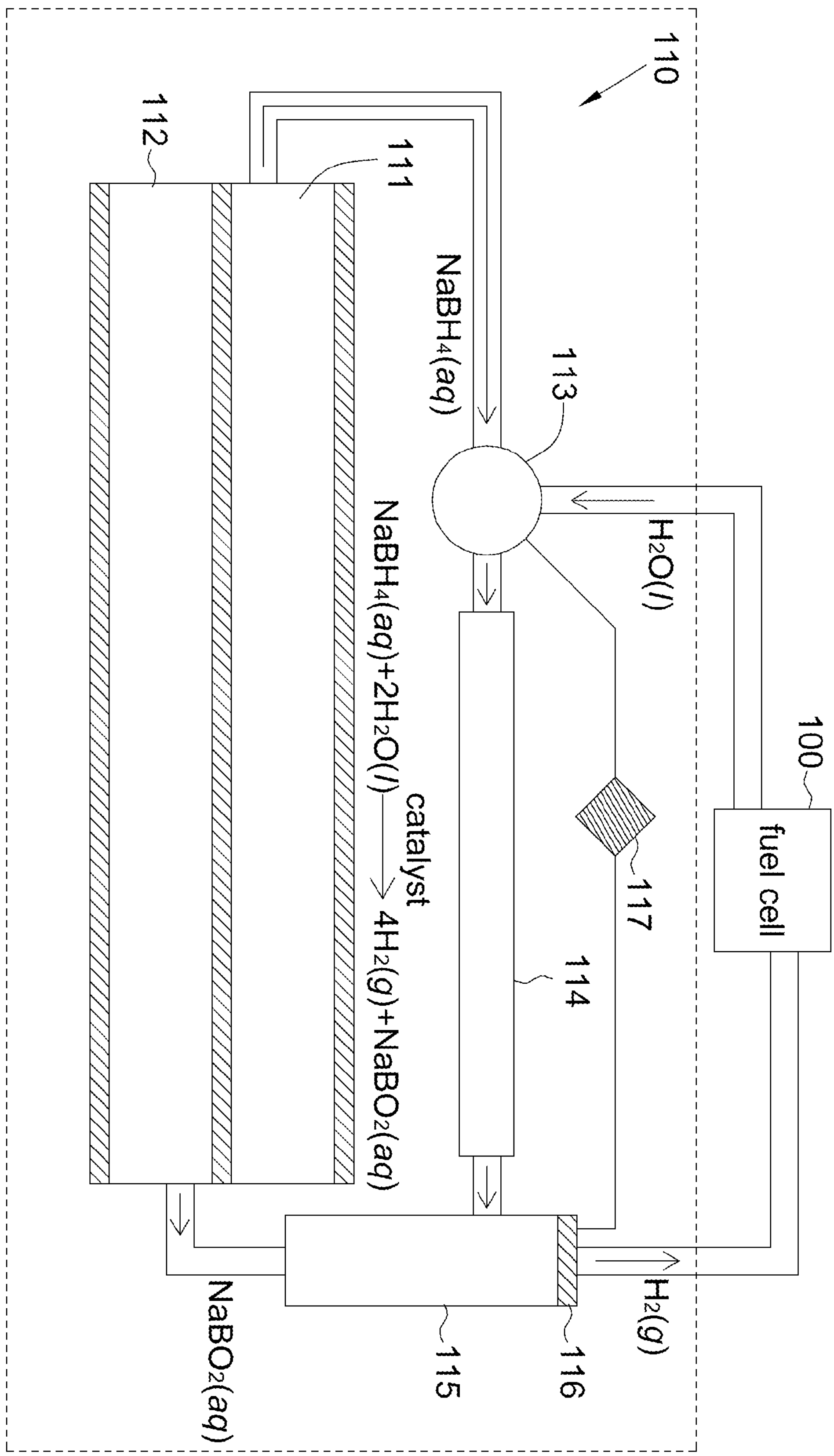


FIG. 1(PRIOR ART)

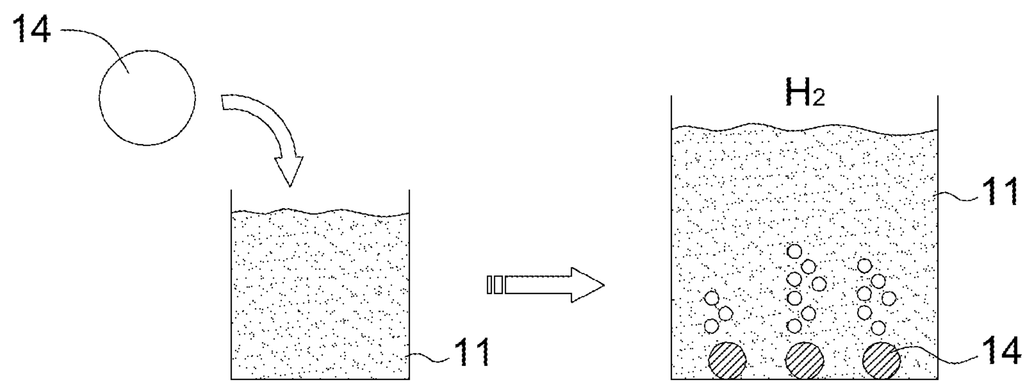


FIG. 2A(PRIOR ART)

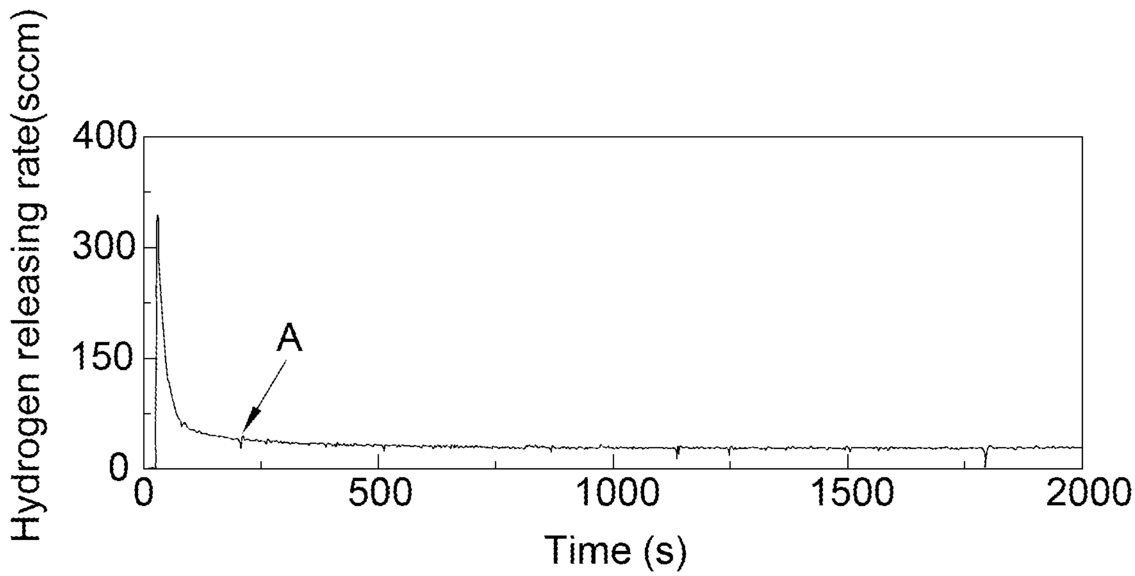


FIG. 2B(PRIOR ART)

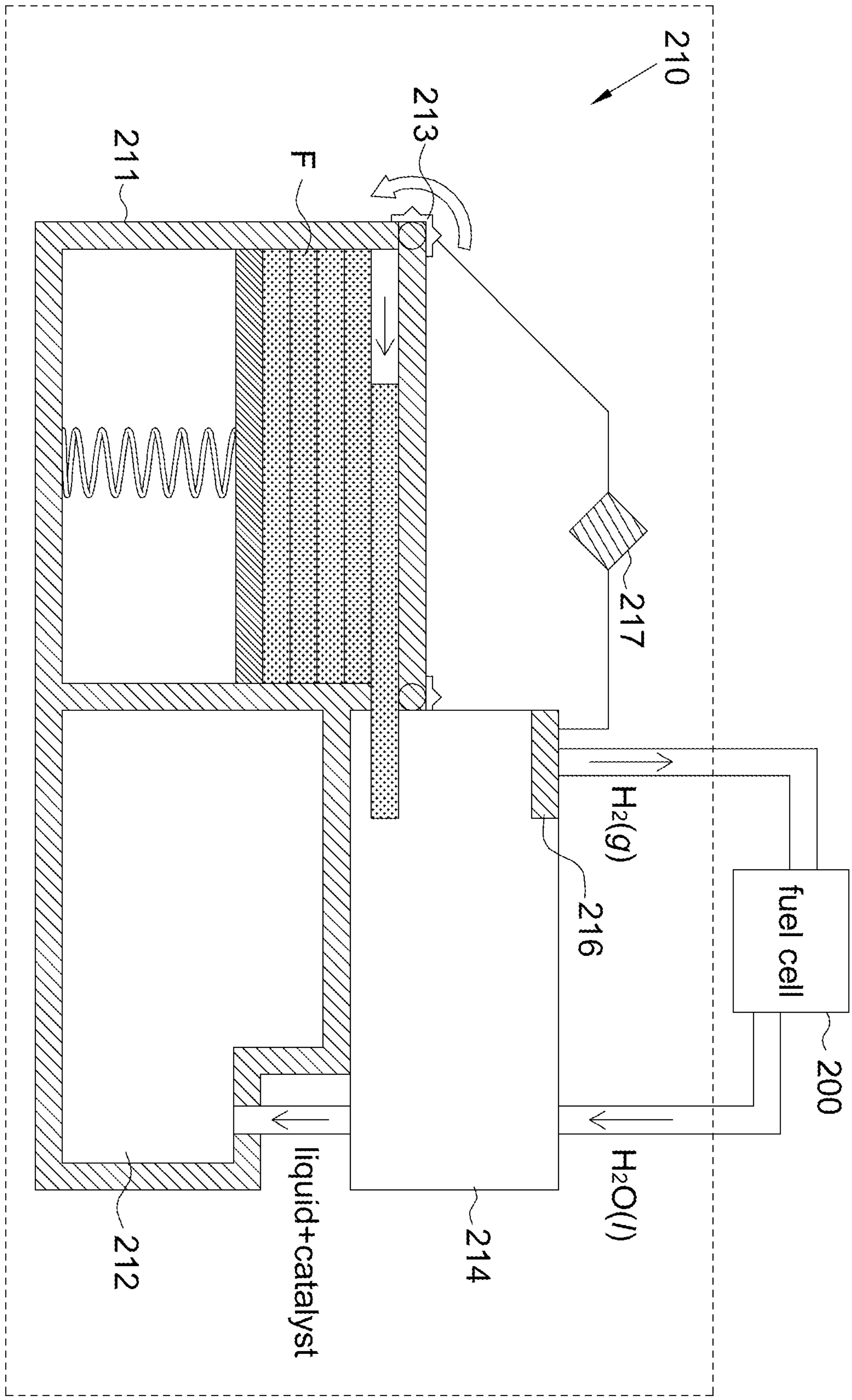
210
213
211
F
217
216
H2(g)
fuel cell
200
H2O(l)
214
212
liquid+catalyst

FIG. 3

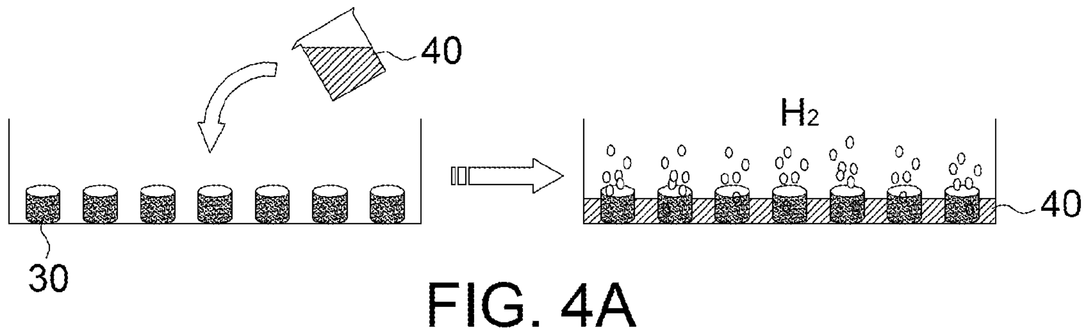


FIG. 4A

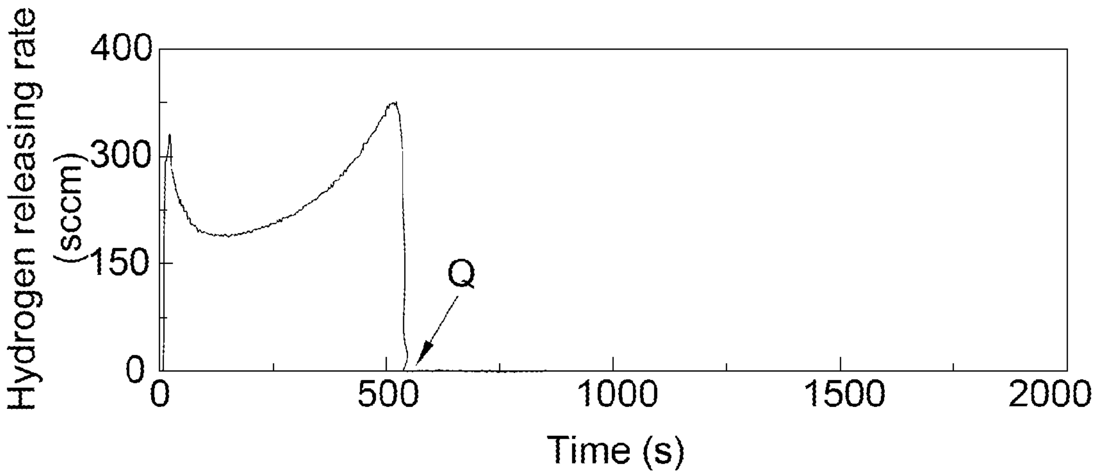


FIG. 4B

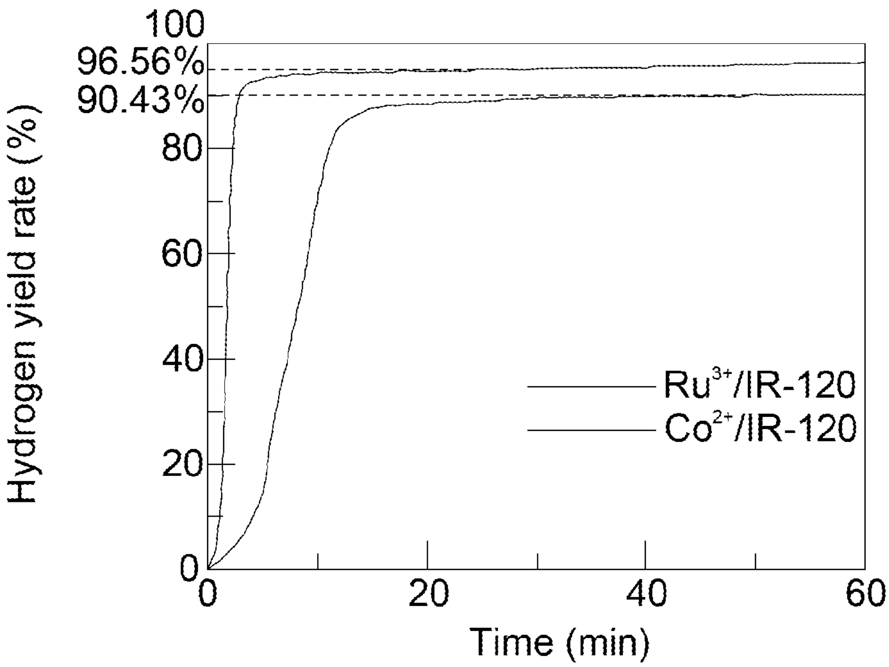


FIG. 5

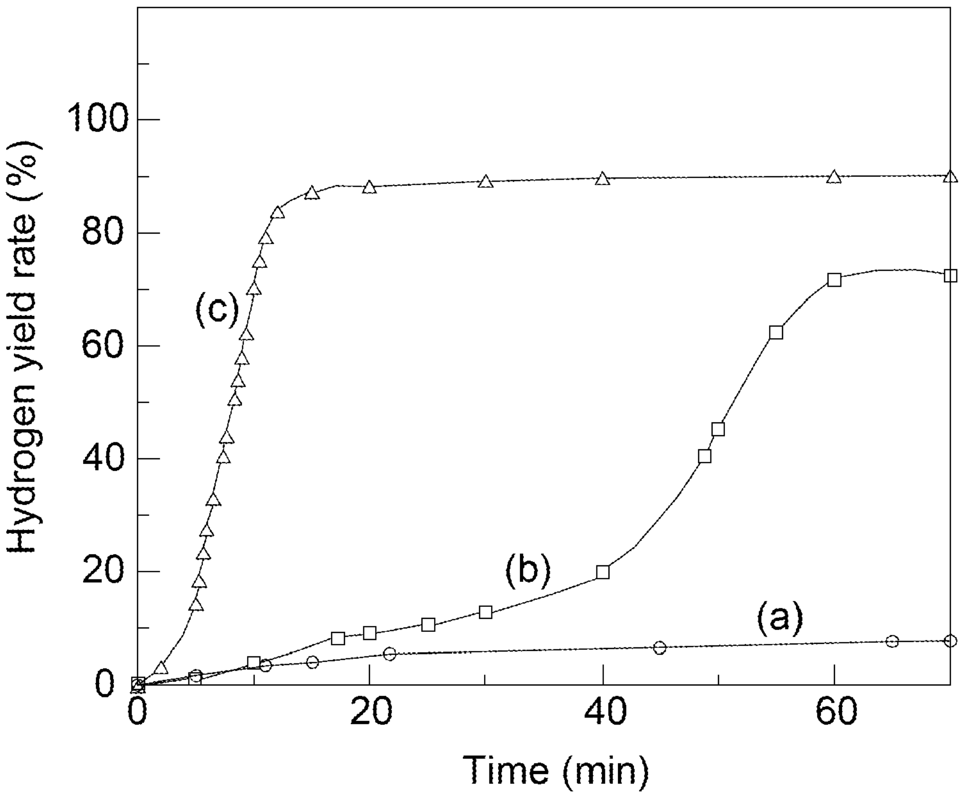


FIG. 6

Table 1

| Reactants | | | catalyst (g) | theoretical value of hydrogen production (volume, 1) | practical hydrogen production (volume, 1) | conversion rate (%) | weight percentage of hydrogen production (wt %) |
|---|---|---|---|---|---|---|---|
| $NaBH_4$(g) | $H_2O$(g) | $NaBH_4$(wt %) | | | | | |
| 1.09 | 2.00 | 35.28 | 0.15[a] | 2.82 | 2.55 | 90.43 | 6.73 |
| 1.12 | 2.00 | 35.90 | 0.15[b] | 2.91 | 2.81 | 96.56 | 7.35 |

[a] cobalt ion catalyst ($Co^{2+}$/IR-120)

[b] ruthenium ion catalyst ($Ru^{3+}$/IR-120)

Table 2

| | Reactants | | | catalyst* (wt%) | ball milling time (min) | theoretical value of hydrogen production (volume, L) | practical hydrogen production (volume, L) | conversion rate (%) | weight percentage of hydrogen production (wt%) |
|---|---|---|---|---|---|---|---|---|---|
| | $NaBH_4$(g) | $H_2O$(g) | $NaBH_4$(wt %) | | | | | | |
| curve (c) | 1.14 | 2.00 | 36.31 | 12.5 | 30.00 | 2.83 | 2.55 | 90.43 | 6.63 |
| curve (b) | 1.16 | 2.00 | 36.71 | 12.5 | 30 | 2.88 | 2.08 | 71.95 | 5.36 |
| curve (a) | 1.16 | 2.00 | 36.71 | 12.5 | 30 | 2.88 | 0.25 | 8.49 | 0.63 |

* The weight percentage of catalyst (wt%) is calculated according to the weight of $NaBH_4$

Europäisches Patentamt
European Patent Office
Office européen des brevets

# EUROPEAN SEARCH REPORT

Application Number
EP 10 15 6441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/005311 A2 (LYNNTECH INC [US]) 20 January 2005 (2005-01-20) * paragraphs [0002], [0 17] - [0020], [0065] - [0070], [0123], [0133], [0139] * | 1-15 | INV. C01B3/06 |
| X | US 2007/020172 A1 (WITHERS-KIRBY SANDRA [US] ET AL WITHERS-KIRBY SANDRA [US] ET AL) 25 January 2007 (2007-01-25) * paragraphs [0029], [0047], [0063] - [0077], [0087] * | 1-15 | |
| X | WO 98/30493 A2 (BRITISH NUCLEAR FUELS PLC [GB]; WAKEFIELD LEIGH [GB]; FOSTER SIMON [GB) 16 July 1998 (1998-07-16) * page 5 * | 1-15 | |
| X | US 2007/068071 A1 (KELLY MICHAEL T [US] ET AL) 29 March 2007 (2007-03-29) * paragraphs [0008] - [0014] * | 1,2,13 | |
| | | | TECHNICAL FIELDS SEARCHED (IPC) |
| | | | C01B |

1

The present search report has been drawn up for all claims

| Place of search | Date of completion of the search | Examiner |
|---|---|---|
| The Hague | 9 July 2010 | Galleiske, Anke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 15 6441

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2010

| Patent document cited in search report | Publication date | Patent family member(s) | Publication date |
|---|---|---|---|
| WO 2005005311 A2 | 20-01-2005 | US 2009324452 A1 | 31-12-2009 |
| US 2007020172 A1 | 25-01-2007 | NONE | |
| WO 9830493 A2 | 16-07-1998 | AU 5490798 A | 03-08-1998 |
| US 2007068071 A1 | 29-03-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- TW 98108327
- TW 98137806